(19) Europäisches Patentamt / European Patent Office / Office européen des brevets

(11) **EP 4 749 696 A1**

(12) **EUROPEAN PATENT APPLICATION**

(43) Date of publication:
27.05.2026 Bulletin 2026/22

(21) Application number: 25216512.1

(22) Date of filing: **18.11.2025**

(51) International Patent Classification (IPC):
*H01M 4/04* (2006.01)   *H01M 4/13* (2010.01)
*H01M 4/62* (2006.01)   *H01M 10/0525* (2010.01)

(52) Cooperative Patent Classification (CPC):
**H01M 4/13; H01M 4/0404; H01M 4/621;
H01M 10/0525**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **19.11.2024 KR 20240165457**

(71) Applicant: **SAMSUNG SDI CO., LTD.
Yongin-si, Gyeonggi-do 17084 (KR)**

(72) Inventor: **KWON, Seunguk
17084 Gyeonggi-do (KR)**

(74) Representative: **Michalski Hüttermann & Partner
Patentanwälte mbB
Kaistraße 16A
40221 Düsseldorf (DE)**

(54) **ELECTRODE BINDER FOR RECHARGEABLE LITHIUM BATTERY, ELECTRODE, AND RECHARGEABLE LITHIUM BATTERY MANUFACTURED USING SAME**

(57)   Provided are an electrode binder for a rechargeable lithium battery, an electrode manufactured using the electrode binder, and a rechargeable lithium battery. The electrode binder for a rechargeable lithium battery includes a metal salt of hydrophilic amino acid.

EP 4 749 696 A1

**Description**

**BACKGROUND**

**1. Field**

An electrode binder for a rechargeable lithium battery, a positive electrode manufactured using the electrode binder, and a rechargeable lithium battery are disclosed.

**2. Description of the Related Art**

A rechargeable lithium battery may be recharged and has three or more times as high energy density per unit weight as a conventional lead storage battery, nickel-cadmium battery, nickel hydrogen battery, nickel zinc battery and the like. A rechargeable lithium battery may be also charged at a high rate, and is thus commercially manufactured for, e.g., a laptop, a cell phone, an electric tool, an electric bike, and the like. Accordingly, improving the energy density of a rechargeable lithium battery may be advantageous.

Such a rechargeable lithium battery is manufactured by injecting an electrolyte solution into an electrode assembly, which includes a positive electrode including a positive electrode active material capable of intercalating/-deintercalating lithium ions and a negative electrode including a negative electrode active material capable of intercalating/deintercalating lithium ions.

The electrode is in general manufactured by using a wet process of using a solvent, but a dry process of using no solvent to aim for environmentally-friendliness and high producibility is also used.

The dry process may be carried out by a fiberization process of a dry binder, a mixing process of an electrode active material and a conductive material during or after the fiberization process, a film-forming process of the mixture, a calendering process for adjusting the formed film into a target thickness, and a lamination process of attaching the film with an adjusted thickness on an electrode current collector.

The dry process generally uses polytetrafluoroethylene (PTFE) as a dry binder, but it is typically challenging to continuously use due to regulations on perfluorinated compounds (PFAS) that are harmful to the human body.

**SUMMARY**

Some example embodiments include an electrode binder for a rechargeable lithium battery that is free from regulations on perfluorinated compounds and suitable for a dry process.

Some example embodiments include an electrode binder for a rechargeable lithium battery including a metal salt of a hydrophilic amino acid.

Some example embodiments include an electrode manufactured using the binder.

Some example embodiments include a rechargeable lithium battery including the electrode.

The electrode binder for a rechargeable lithium battery including a metal salt of a hydrophilic amino acid according to the above-described example embodiment may be suitably used in a dry process while being free from regulations on perfluorinated compounds.

Accordingly, an electrode manufactured using a binder according to the above-described example embodiment can secure the electrochemical characteristics of a rechargeable lithium battery while replacing an electrode using PTFE.

**BRIEF DESCRIPTION OF THE DRAWINGS**

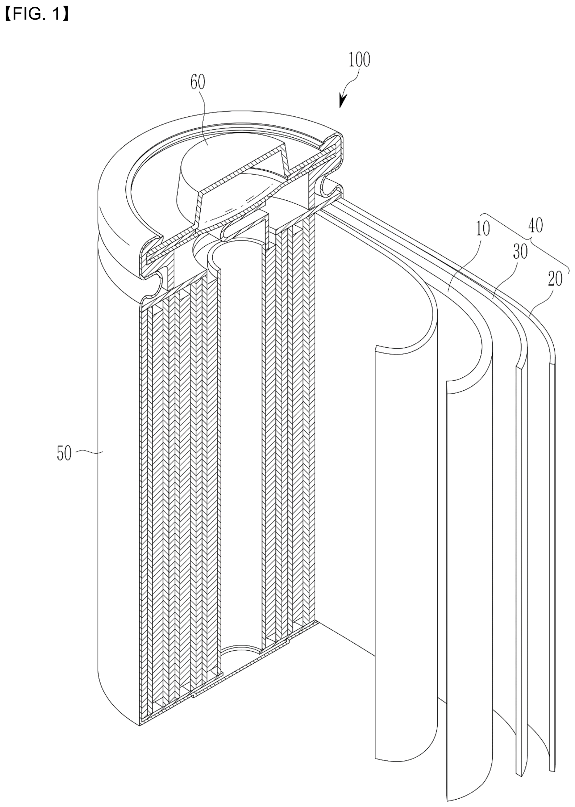

FIGS. 1 to 4 are schematic views illustrating rechargeable lithium batteries according to some example embodiments.

**DETAILED DESCRIPTION**

Hereinafter, example embodiments of the present disclosure are described in detail. However, these embodiments are examples, the present disclosure is not limited thereto and the present disclosure is defined by the scope of claims.

As used herein, when a specific definition is not otherwise provided, it is understood that when an element such as a layer, film, region, or substrate is referred to as being "on" another element, the element can be directly on the other element or intervening elements may also be present therebetween.

As used herein, when a specific definition is not otherwise provided, the singular may also include the plural. In addition, unless otherwise specified, "A or B" may mean "including A, including B, or including A and B."

As used herein, "combination thereof" may mean a mixture, a stack, a composite, a copolymer, an alloy, a blend, or a reaction product of constituents.

In this specification, the weight average molecular weight (Mw) of the binder may be a value measured using the gel permeation chromatography (GPC) method.

When the terms "about" or "substantially" are used in this specification in connection with a numerical value, it is intended that the associated numerical value include a tolerance of $\pm 10\%$ around the stated numerical value. When ranges are specified, the range includes all values therebetween such as increments of 0.1%.

**Electrode Binder for Rechargeable Lithium Battery:**

Some example embodiments include an electrode binder for a rechargeable lithium battery including a metal salt of a hydrophilic amino acid.

According to the aforementioned example embodiments, when a metal salt of a hydrophilic amino acid is used, the initial efficiency and cycle-life characteristics of a rechargeable lithium battery can be improved while the maximum tensile strength is improved at an equivalent level of negative electrode active material layer thickness compared to when the hydrophilic amino acid itself is used.

Therefore, an electrode binder for a rechargeable lithium battery including a metal salt of a hydrophilic amino acid according to the aforementioned example embodiments may be suitably used in a dry process while being free from the regulations on perfluorinated compounds.

Hereinafter, an electrode binder for a rechargeable lithium battery according to the above-described example embodiment is described in detail.

The hydrophilic amino acid may be or include at least one of sericin, serine, or a combination thereof.

The sericin, serine, or the combination thereof is a polymer that provides a basic framework of an electrode binder for a rechargeable lithium battery according to the aforementioned example embodiments, and unlike PTFE, does not include a perfluorinated compound, and therefore does not cause environmental problems during production and disposal. The polymer can also be fiberized at lower temperatures than PTFE. However, the fiberization temperature may vary depending on the process and equipment causing fiberization.

The metal salt may be or include a lithium salt, a sodium salt, a potassium salt, or a combination thereof.

For example, the metal salt may be or include a lithium salt or a sodium salt, and may be used in a battery using lithium ions or sodium ions, respectively.

The metal salt of the hydrophilic amino acid may have a structure in which the *-C=O functional group of the hydrophilic amino acid is substituted with a *-C-O-M$^+$ functional group.

For example, among 100% of the total *-C=O functional groups of the hydrophilic amino acid, $\geq 10$ to $\leq 100\%$, $\geq 20$ to $\leq 100\%$, $\geq 30$ to $\leq 100\%$, $\geq 40$ to $\leq 100\%$, or $\geq 50$ to $\leq 100\%$ may be substituted with the *-C-O-M$^+$ functional groups. Here, M may be or includes at least one of Li, Na, K, or a combination thereof, and the ratio expressed as a percentage (%) may be referred to the metal (M) "substitution rate" of the hydrophilic amino acid.

The electrode binder for a rechargeable lithium battery according to the aforementioned example embodiments may be composed of 100 wt% of the hydrophilic amino acid.

The electrode binder can be used in combination with polytetrafluoroethylene (PTFE), a conventionally known dry binder, and in this case, $\geq 0.1$ to $\leq 80$ parts by weight of the polytetrafluoroethylene may be used based on 100 parts by weight of the electrode binder for a rechargeable lithium battery according to the aforementioned example embodiments.

**Electrode and Rechargeable Lithium Battery:**

Some example embodiments include an electrode for a rechargeable lithium battery, including an electrode current collector, and an electrode active material layer on the electrode current collector, wherein the electrode active material layer includes an electrode binder including a metal salt of a hydrophilic amino acid, and an electrode active material.

The electrode may be an electrode manufactured using an electrode binder according to the aforementioned example embodiments, and may be applicable to both the positive and negative electrodes.

Hereinafter, the electrode for a rechargeable lithium battery and a rechargeable lithium battery according to the aforementioned example embodiments are described in detail, excluding any description overlapping with the aforementioned descriptions.

Positive Electrode Active Material

The positive electrode active material may be or include a compound (lithiated intercalation compound) capable of intercalating and deintercalating lithium. For example, one or more types of composite oxides of lithium and a metal such as or including at least one of cobalt, manganese, nickel, and combinations thereof may be used.

The composite oxide may be or include a lithium transition metal composite oxide, and examples thereof may include a lithium nickel-based oxide, a lithium cobalt-based oxide, a lithium manganese-based oxide, a lithium iron phosphate-based compound, a cobalt-free lithium nickel-manganese-based oxide, or a combination thereof.

As an example, a compound represented by any of the following chemical formulas may be used. $Li_aA_{1-b}X_bO_{2-c}D_c$ ($0.90 \leq a \leq 1.8$, $0 \leq b \leq 0.5$, $0 \leq c \leq 0.05$); $Li_aMn_{2-b}X_bO_{4-c}D_c$ ($0.90 \leq a \leq 1.8$, $0 \leq b \leq 0.5$, $0 \leq c \leq 0.05$); $Li_aNi_{1-b-c}Co_bX_cO_{2-\alpha}D_\alpha$ ($0.90 \leq a \leq 1.8$, $0 \leq b \leq 0.5$, $0 \leq c \leq 0.5$, $0 < \alpha < 2$); $Li_aNi_{1-b-c}Mn_bX_cO_{2-\alpha}D_\alpha$ ($0.90 \leq a \leq 1.8$, $0 \leq b \leq 0.5$, $0 \leq c \leq 0.5$, $0 < \alpha < 2$); $Li_aNi_bCo_cL^1_dG_eO_2$ ($0.90 \leq a \leq 1.8$, $0 \leq b \leq 0.9$, $0 \leq c \leq 0.5$, $0 \leq d \leq 0.5$, $0 \leq e \leq 0.1$); $Li_aNiG_bO_2$ ($0.90 \leq a \leq 1.8$, $0.001 \leq b \leq 0.1$); $Li_aCoG_bO_2$ ($0.90 \leq a \leq 1.8$, $0.001 \leq b \leq 0.1$); $Li_aMn_{1-b}G_bO_2$ ($0.90 \leq a \leq 1.8$, $0.001 \leq b \leq 0.1$); $Li_aMn_2G_bO_4$ ($0.90 \leq a \leq 1.8$, $0.001 \leq b \leq 0.1$); $Li_aMn_{1-g}G_gPO_4$ ($0.90 \leq a \leq 1.8$, $0 \leq g \leq 0.5$); $Li_{(3-f)}Fe_2(PO_4)_3$ ($0 \leq f \leq 2$); and $Li_aFePO_4$ ($0.90 \leq a \leq 1.8$).

In the above chemical formulas, A is or includes at least one of Ni, Co, Mn, or a combination thereof; X is or includes at least one of Al, Ni, Co, Mn, Cr, Fe, Mg, Sr, V, a rare earth element, or a combination thereof; D is or includes at least one of O, F, S, P, or a combination thereof; G is or includes at least one of Al, Cr, Mn, Fe, Mg, La, Ce, Sr, V, or a combination thereof; and $L^1$ is or includes at least one of Mn, Al, or a combination thereof.

The positive electrode active material may be or include, for example, at least one of a lithium nickel-based oxide represented by Chemical Formula 11, a lithium cobalt-based oxide represented by Chemical Formula 12, a lithium iron phosphate-based compound represented by Chemical Formula 13, a cobalt-free lithium nickel-manganese-based oxide represented by Chemical Formula 14, or a combination thereof.

Chemical Formula 11:     $Li_{a1}Ni_{x1}M^1_{y1}M^2_{z1}O_{2-b1}X_{b1}$.

In Chemical Formula 11, $0.9 \leq a1 \leq 1.8$, $0.3 \leq x1 \leq 1$, $0 \leq y1 \leq 0.7$, $0 \leq z1 \leq 0.7$, $0.9 \leq x1+y1+z1 \leq 1.1$, and $0 \leq b1 \leq 0.1$, $M^1$ and $M^2$ each independently are or include one or more of Al, B, Ba, Ca, Ce, Co, Cr, Cu, Fe, Mg, Mn, Mo, Nb, Si, Sn, Sr, Ti, V, W, and Zr, and X is or includes one or more of F, P, and S.

In Chemical Formula 11, $0.6 \leq x1 \leq 1$, $0 \leq y1 \leq 0.4$, and $0 \leq z1 \leq 0.4$, or $0.8 \leq x1 \leq 1$, $0 \leq y1 \leq 0.2$, and $0 \leq z1 \leq 0.2$.

Chemical Formula 12:     $Li_{a2}Co_{x2}M^3_{y2}O_{2-b2}X_{b2}$.

In Chemical Formula 12, $0.9 \leq a2 \leq 1.8$, $0.7 \leq x2 \leq 1$, $0 \leq y2 \leq 0.3$, $0.9 \leq x2+y2 \leq 1.1$, and $0 \leq b2 \leq 0.1$, $M^3$ is or includes one or more of Al, B, Ba, Ca, Ce, Cr, Cu, Fe, Mg, Mn, Mo, Ni, Se, Si, Sn, Sr, Ti, V, W, Y, Zn, and Zr, and X is or includes one or more of F, P, and S.

Chemical Formula 13:     $Li_{a3}Fe_{x3}M^4_{y3}PO_{4-b3}X_{b3}$.

In Chemical Formula 13, $0.9 \leq a3 \leq 1.8$, $0.6 \leq x3 \leq 1$, $0 \leq y3 \leq 0.4$, and $0 \leq b3 \leq 0.1$, $M^4$ is or includes one or more of Al, B, Ba, Ca, Ce, Co, Cr, Cu, Mg, Mn, Mo, Ni, Se, Si, Sn, Sr, Ti, V, W, Y, Zn, and Zr, and X is or includes one or more of F, P, and S.

Chemical Formula 14:     $Li_{a4}Ni_{x4}Mn_{y4}M^5_{z4}O_{2-b4}X_{b4}$.

In Chemical Formula 14, $0.9 \leq a4 \leq 1.8$, $0.8 \leq x4 < 1$, $0 < y4 \leq 0.2$, $0 \leq z4 \leq 0.2$, $0.9 \leq x4+y4+z4 \leq 1.1$, and $0 \leq b4 \leq 0.1$, $M^5$ is or includes one or more element such as or including at least one of Al, B, Ba, Ca, Ce, Cr, Fe, Mg, Mo, Nb, Si, Sn, Sr, Ti, V, W, and Zr, and X is or includes one or more of F, P, and S.

For example, the positive electrode active material may be or include a high-nickel positive electrode active material in which the nickel content is greater than or equal to about 80 mol%, greater than or equal to about 85 mol%, greater than or equal to about 90 mol%, greater than or equal to about 91 %, or greater than or equal to about 94 mol% and less than or equal to about 99 mol%, based on 100 mol% of metal excluding lithium in the lithium transition metal composite oxide. The high-nickel positive electrode active material can achieve high capacity, and can be applied to high-capacity, high-density rechargeable lithium batteries.

Positive Electrode

The positive electrode for a rechargeable lithium battery may include a current collector and a positive electrode active material layer on the current collector.

The positive electrode active material layer may include a positive electrode active material, and may further include a binder and/or a conductive material.

For example, the positive electrode may further include an additive that can constitute a sacrificial positive electrode.

An amount of the positive electrode active material may be in a range of $\geq 90$ wt% to $\leq 99.5$ wt% based on 100 wt% of the positive electrode active material layer, and each amount of the binder and the conductive material may be in a range of $\geq$ 0.5 wt% to $\leq$ 5 wt% based on 100 wt% of the positive electrode active material layer.

The binder improves binding properties of positive electrode active material particles with one another and with a current collector. Examples of binders may include at least one of polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth) acrylic resin, a polyester resin, and nylon, but are not limited thereto.

The conductive material is included to provide electrode conductivity, and any electrically conductive material may be used as a conductive material unless the electrically conductive material causes a chemical change. Examples of the conductive material may include a carbon-based material such as at least one of natural graphite, artificial graphite, carbon black, acetylene black, Ketjen black, a carbon fiber, a carbon nanofiber, a carbon nanotube, and the like; a metal-based material of a metal powder or a metal fiber including at least one of copper, nickel, aluminum, silver, and the like; a conductive polymer such as a polyphenylene derivative; or a mixture thereof.

Negative Electrode Active Material

The negative electrode active material may include at least one of a material that reversibly intercalates/deintercalates lithium ions, a lithium metal, a lithium metal alloy, a material capable of doping/dedoping lithium, or transition metal oxide.

The material that reversibly intercalates/deintercalates lithium ions may include, for example crystalline carbon, amorphous carbon, or a combination thereof as a carbon-based negative electrode active material. The crystalline carbon may be irregular, or sheet, flake, spherical, or fiber shaped natural graphite or artificial graphite. The amorphous carbon may be or include at least one of a soft carbon, a hard carbon, a mesophase pitch carbonization product, calcined coke, and the like.

The lithium metal alloy includes an alloy of lithium and a metal such as or including at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include a Si-based negative electrode active material or a Sn-based negative electrode active material. The Si-based negative electrode active material may include at least one of silicon, a silicon-carbon composite, $SiO_x$ ($0 < x \leq 2$), a Si-Q alloy (wherein Q is an element such as or including at least one of an alkali metal, an alkaline-earth metal, a Group 13 element, a Group 14 element (excluding Si), a Group 15 element, a Group 16 element, a transition metal, a rare earth element, and a combination thereof), or a combination thereof. The Sn-based negative electrode active material may be or include at least one of Sn, $SnO_2$, a Sn-based alloy, or a combination thereof.

The silicon-carbon composite may be or include a composite of silicon and amorphous carbon. According to some example embodiments, the silicon-carbon composite may be in the form of silicon particles and amorphous carbon coated on the surface of the silicon particles. For example, the silicon-carbon composite may include a secondary particle (core) in which silicon primary particles are assembled, and an amorphous carbon coating layer (shell) on the surface of the secondary particle. The amorphous carbon may also be present between the silicon primary particles, for example, the silicon primary particles may be coated with amorphous carbon. The secondary particles may be dispersed in an amorphous carbon matrix.

The silicon-carbon composite may further include crystalline carbon. For example, the silicon-carbon composite may include a core including crystalline carbon and silicon particles, and an amorphous carbon coating layer on the surface of the core.

The Si-based negative electrode active material or Sn-based negative electrode active material may be mixed with the carbon-based negative electrode active material.

Negative Electrode

A negative electrode for a rechargeable lithium battery includes a current collector and a negative electrode active material layer on the current collector. The negative electrode active material layer includes a negative electrode active material, and may further include a binder and/or a conductive material.

For example, the negative electrode active material layer may include $\geq$ 90 wt% to $\leq$ 99 wt% of the negative electrode active material, $\geq$ 0.5 wt% to $\leq$ 5 wt% of the binder, and $\geq$ 0.5 wt% to $\leq$ 5 wt% of the conductive material.

The binder adheres the negative electrode active material particles to each other, and adheres the negative electrode active material to the current collector. The binder may be or include a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include at least one of a styrene-butadiene rubber, a (meth)acrylated styrene-butadiene rubber, a (meth)acrylonitrile-butadiene rubber, a (meth)acrylic rubber, butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

When an aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. The alkali metal may be or include at least one of Na, K, or Li.

The dry binder is or includes a polymer material capable of being fiberized, and may be or include, for example, at least one of polytetrafluoroethylene, polyvinylidene fluoride, polyvinylidene fluoride-hexafluoropropylene copolymer, polyethylene oxide, or a combination thereof, but may use the aforementioned electrode binder according to some example embodiments. According to the aforementioned example embodiments, a negative electrode using an electrode binder including a metal salt of a hydrophilic amino acid can be used suitably in a dry process while being free from regulations on perfluorinated compounds.

The conductive material is included to provide electrode conductivity, and any electrically conductive material may be used as a conductive material unless the electrically conductive material causes an undesirable chemical change in the battery. Examples of the conductive material include a carbon-based material such as at least one of natural graphite, artificial graphite, carbon black, acetylene black, Ketjen black, a carbon fiber, a carbon nanofiber, a carbon nanotube, and the like; a metal-based material of a metal powder or a metal fiber including at least one of copper, nickel, aluminum silver, and the like; a conductive polymer such as a polyphenylene derivative; or a mixture thereof.

The negative electrode current collector may include at least one of a copper foil, a nickel foil, a stainless-steel foil, a titanium foil, a nickel foam, a copper foam, a polymer substrate coated with a conductive metal, and a combination thereof.

Electrolyte Solution

An electrolyte solution for a rechargeable lithium battery includes a non-aqueous organic solvent and a lithium salt.

The non-aqueous organic solvent constitutes a medium for transmitting ions taking part in the electrochemical reaction of a battery.

The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include at least one of methyl acetate, ethyl acetate, n-propyl acetate, dimethyl acetate, methyl propionate, ethyl propionate, decanolide, mevalonolactone, valerolactone, caprolactone, and the like. The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like. The aprotic solvent may include at least one of nitriles such as R-CN (wherein R is a C2 to C20 linear, branched, or cyclic hydrocarbon group, a double bond, an aromatic ring, or an ether group, and the like); amides such as dimethylformamide; dioxolanes such as 1,3-dioxolane, 1,4-dioxolane, and the like; sulfolanes, and the like.

The non-aqueous organic solvent may be used alone or in a mixture of two or more types of solvents.

In examples, when using a carbonate-based solvent, a cyclic carbonate and a chain carbonate may be mixed, and the cyclic carbonate and the chain carbonate may be mixed in a volume ratio in a range of about 1:1 to about 1:9.

The electrolyte solution may further include at least one of vinylethyl carbonate, vinylene carbonate, fluoroethylene carbonate, difluoro ethylenecarbonate, chloroethylene carbonate, dichloroethylene carbonate, bromoethylene carbonate, dibromoethylene carbonate, nitroethylene carbonate, cyanoethylene carbonate, or a combination thereof as an additive.

The lithium salt dissolved in the organic solvent supplies lithium ions in a battery, enables an operation of a rechargeable lithium battery, and improves transportation of the lithium ions between positive and negative electrodes. Examples of the lithium salt may include at least one of $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (wherein x and y are integers in a range of 1 to 20), lithium trifluoromethane sulfonate, lithium tetrafluoroethane sulfonate, lithium difluorobis(oxalato) phosphate (LiDFOB), and lithium bis(oxalato) borate (LiBOB).

Separator

Depending on the type of rechargeable lithium battery, a separator may be present between the positive and negative electrodes. The separator may include at least one of polyethylene, polypropylene, polyvinylidene fluoride, or a multilayer film of two or more layers thereof, and a mixed multilayer film such as a polyethylene/polypropylene two-layer separator, a polyethylene/polypropylene/polyethylene three-layer separator, a polypropylene/polyethylene/polypropylene three-layer separator, and the like.

The separator may include a porous substrate and a coating layer including an organic material, an inorganic material, or a combination thereof on one surface, or on both surfaces, of the porous substrate.

The porous substrate may be or include a polymer film formed of or including any one polymer such as or including at least one of polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The organic material may include a polyvinylidene fluoride-based polymer or a (meth)acrylic polymer.

The inorganic material may include inorganic particles such as or including at least one of $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, and a combination thereof, but is not limited thereto.

The organic material and the inorganic material may be mixed in one coating layer, or a coating layer including an organic material and a coating layer including an inorganic material may be stacked.

Rechargeable Lithium Battery

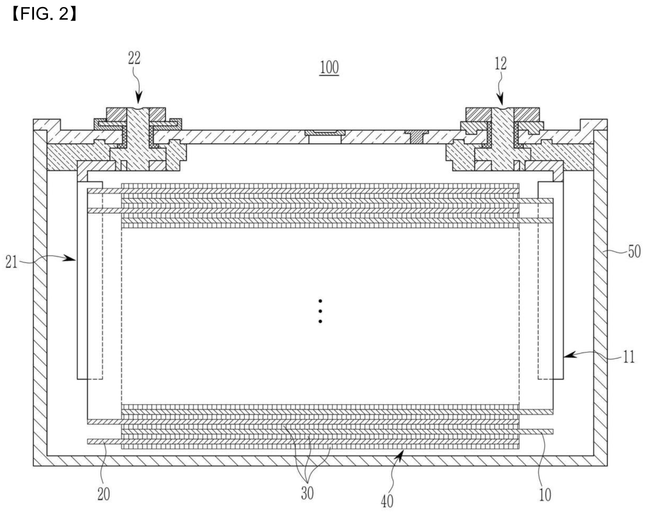

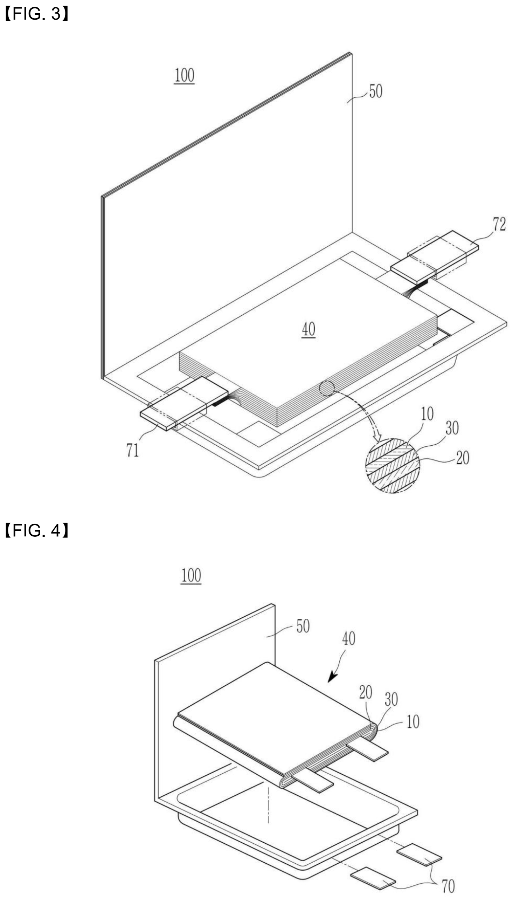

The rechargeable lithium battery may be classified into cylindrical, prismatic, pouch, or coin-type batteries, and the like depending on the shape thereof. FIGS. 1 to 4 are schematic views showing the rechargeable lithium battery according to some example embodiments, where FIG. 1 is a cylindrical battery, FIG. 2 is a prismatic battery, and FIGS. 3 and 4 are a pouch-shaped battery. Referring to FIGS. 1 to 4, the rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte solution (not shown). The rechargeable lithium battery 100 may include a sealing member 60 that seals the case 50 as shown in FIG. 1. Additionally, in FIG. 2, the rechargeable lithium battery 100 may include a positive electrode lead tab 11, a positive electrode terminal 12 connected to the positive electrode lead tab 11, a negative electrode lead tab 21, and a negative electrode terminal 22 connected to the negative electrode lead tab 21. As shown in FIGS. 3 and 4, the rechargeable lithium battery 100 includes an electrode tab 70 illustrated in FIG. 4, or a positive electrode tab 71 and a negative electrode tab 72 illustrated in FIG. 3, the electrode tabs 70/71/72 forming an electrical path for inducing the current formed in the electrode assembly 40 to the outside of the battery 100.

The rechargeable lithium battery according to some example embodiments may be applicable to, e.g., automobiles, mobile phones, and/or various types of electrical devices, but the present disclosure is not limited thereto.

Examples and comparative examples of the present disclosure are described below. However, the following examples are only examples of the present disclosure, and the present disclosure is not limited to the following examples.

**Comparative Example 1**

(1) Manufacturing of Negative Electrode

Polyvinylidene fluoride was added to an N-methyl pyrrolidone solvent to prepare a non-conductive polymer solution having a solid content of 3.0 wt%.

Subsequently, artificial graphite was immersed in the non-conductive polymer solution, and dried to prepare a negative electrode active material in which a non-conductive film was coated on the entire surface of the artificial graphite. Herein, the artificial graphite and the non-conductive polymer had a weight ratio of 99.2:0.8, and the non-conductive film had a thickness of 3.0 nm.

98.8 wt% of the negative electrode active material and 1.2 wt% of sericin (Mw: 488 g/mol) as a binder were dry-mixed at 5000 rpm for 10 minutes by using a mixer facility, and an extruder facility was then used to homogenize the dry-mixed mixture and fiberize the binder, thereby obtaining a powder mixture in which the binder was fiberized.

The dry powder mixture was twice mixed in this way, and then used to make a self-standing dry film by using a Roll Calender machine.

This self-supporting film was laminated to a copper foil current collector to manufacture a negative electrode.

(2) Manufacturing of Positive Electrode

$LiNi_{0.91}Co_{0.05}Al_{0.04}O_2$ as a positive electrode active material, polyvinylidene fluoride (PVDF) as a binder, and a carbon a conductive agent were mixed in a weight ratio of 92:4:4 and then, dispersed in N-methyl-2-pyrrolidone to prepare a positive electrode slurry. This slurry was coated on a 10 μm-thick Al foil and then, dried at 100 °C and pressed to form a positive electrode active material layer.

(3) Preparation of Electrolyte Solution

An electrolyte solution was prepared by mixing 1.5 M lithium salt ($LiPF_6$) with a carbonate solvent including ethylene carbonate (EC): ethyl methyl carbonate (EMC): dimethyl carbonate (DMC) mixed in a volume ratio of 20:40:40.

(4) Manufacturing of Rechargeable Lithium Battery Cell

The manufactured positive and negative electrodes were assembled to obtain an electrode assembly, and then inserted into a pouch-type case, and the electrolyte solution was injected thereinto to manufacture a rechargeable lithium battery cell.

**Example 1-1**

49.16 g of LiOH (Mw. 23.95 g/mol) based on 500 g of sericin (Mw: 488 g/mol) was used as a solvent to substitute Li, and the solvent was removed by drying to manufacture a sericin lithium salt at a metal (M=Li) substitution rate of 50%.
A negative electrode and a rechargeable lithium battery cell of Example 1-1 were manufactured in the same manner as in Comparative Example 1, with a difference that the sericin lithium salt with a metal (M=Li) substitution rate of 50% was used instead of the sericin as the binder in the manufacture of the negative electrode.

**Example 1-2**

73.9 g of LiOH (Mw. 23.95 g/mol) based on 500 g of sericin (Mw: 488 g/mol) was used as a solvent to substitute Li, and the solvent was removed by drying to manufacture a sericin lithium salt at a metal (M=Li) substitution rate of 75%.
A negative electrode and a rechargeable lithium battery cell of Example 1-2 were manufactured in the same manner as in Comparative Example 1, with a difference that the sericin lithium salt with a metal (M=Li) substitution rate of 75% was used instead of the sericin as the binder in the manufacture of the negative electrode.

**Example 1-3**

98.7 g of LiOH (Mw. 23.95 g/mol) based on 500 g of sericin (Mw: 488 g/mol) was used as a solvent to substitute Li, and the solvent was removed by drying to manufacture a sericin lithium salt at a metal (M=Li) substitution rate of 100%.
A negative electrode and a rechargeable lithium battery cell of Example 1-3 were manufactured in the same manner as in Comparative Example 1, with a difference that the sericin lithium salt with a metal (M=Li) substitution rate of 100% was used instead of the sericin as the binder in the manufacture of the negative electrode.

**Example 2-1**

82.2 g of NaOH (Mw. 40 g/mol) based on 500 g of sericin (Mw: 488 g/mol) was used as a solvent to substitute Li, and the solvent was removed by drying to manufacture a sericin lithium salt at a metal (M=Na) substitution rate of 50%.
A negative electrode and a rechargeable lithium battery cell of Example 2-1 were manufactured in the same manner as in Comparative Example 1, with a difference that the sericin lithium salt at a metal (M=Na) substitution rate of 50% was used instead of the sericin as the binder in the manufacture of the negative electrode.

**Example 2-2**

123.5 g of NaOH (Mw. 40 g/mol) based on 500 g of sericin (Mw: 488 g/mol) was used as a solvent to substitute Li, and the solvent was removed by drying to manufacture a sericin lithium salt at a metal (M=Na) substitution rate of 75%.
A negative electrode and a rechargeable lithium battery cell of Example 2-2 were manufactured in the same manner as in Comparative Example 1, with a difference that the sericin lithium salt with a metal (M=Na) substitution rate of 75% was used instead of the sericin as the binder in the manufacture of the negative electrode.

**Example 2-3**

165 g of NaOH (Mw. 40 g/mol) based on 500 g of sericin (Mw: 488 g/mol) was used as a solvent to substitute Li, and the solvent was removed by drying to manufacture a sericin lithium salt at a metal (M=Na) substitution rate of 100%.
A negative electrode and a rechargeable lithium battery cell of Example 2-3 were manufactured in the same manner as in Comparative Example 1, with a difference that the sericin lithium salt with a metal (M=Na) substitution rate of 100% was used instead of the sericin as the binder in the manufacture of the negative electrode.

**Comparative Example 2**

A negative electrode and a rechargeable lithium battery cell of Comparative Example 2 were manufactured in the same manner as in Comparative Example 1, with a difference that serine (Mw: 105.1 g/mol) was used instead of the sericin as the binder in the manufacture of the negative electrode.

**Example 3-1**

17.2 g of LiOH (Mw. 23.95 g/mol) as a solvent based on 500 g of sericin (Mw: 105.1 g/mol) was used to substitute Li, and the solvent was removed by drying to manufacture a sericin lithium salt at a metal (M=Li) substitution rate of 50%.
A negative electrode and a rechargeable lithium battery cell of Example 3-1 were manufactured in the same manner as in Comparative Example 2, with a difference that the sericin lithium salt at a metal (M=Li) substitution rate of 50% was used instead of the sericin as the binder in the manufacture of the negative electrode.

**Example 3-2**

24.1 g of LiOH (Mw. 23.95 g/mol) as a solvent based on 500 g of sericin (Mw: 105.1 g/mol) was used to substitute Li, and the solvent was removed by drying to manufacture a sericin lithium salt at a metal (M=Li) substitution rate of 70%.
A negative electrode and a rechargeable lithium battery cell of Example 3-2 were manufactured in the same manner as in Comparative Example 2, with a difference that the metal (M=Li) substitution rate of 70% was used instead of the sericin as the binder in the manufacture of the negative electrode.

**Example 3-3**

34.5 g of LiOH (Mw. 23.95 g/mol) based on 500 g of sericin (Mw: 105.1 g/mol) was used as a solvent to substitute Li, and the solvent was removed by drying to manufacture a sericin lithium salt at a metal (M=Li) substitution rate of 100%.
A negative electrode and a rechargeable lithium battery cell of Example 3-3 were manufactured in the same manner as in Comparative Example 2, with a difference that the sericin lithium salt at a metal (M=Li) substitution rate of 100% was used instead of the sericin as the binder in the manufacture of the negative electrode.

**Example 4-1**

28.7 g of NaOH (Mw. 40 g/mol) based on 500 g of sericin (Mw: 105.1 g/mol) was used as a solvent to substitute Li, and the solvent was removed by drying to manufacture a sericin lithium salt at a metal (M=Na) substitution rate of 50%.
A negative electrode and a rechargeable lithium battery cell of Example 4-1 were manufactured in the same manner as in Comparative Example 2, with a difference that the sericin lithium salt at a metal (M=Na) substitution rate of 50% was used instead of the sericin as the binder in the manufacture of the negative electrode.

**Example 4-2**

40.2 g of NaOH (Mw. 40 g/mol) based on 500 g of sericin (Mw: 105.1 g/mol) was used as a solvent to substitute Li, and the solvent was removed by drying to manufacture a sericin lithium salt at a metal (M= Na) substitution rate of 70%.
A negative electrode and a rechargeable lithium battery cell of Example 4-2 were manufactured in the same manner as in Comparative Example 2, with a difference that the sericin lithium salt at a metal (M= Na) substitution rate of 70% was used instead of the sericin as the binder in the manufacture of the negative electrode.

**Example 4-3**

57.6 g of NaOH (Mw. 40 g/mol) based on 500 g of sericin (Mw: 105.1 g/mol) was used as a solvent to substitute Li, and the solvent was removed by drying to manufacture a sericin lithium salt at a metal (M=Na) substitution rate of 100%.

A negative electrode and a rechargeable lithium battery cell of Example 4-3 were manufactured in the same manner as in Comparative Example 2, with a difference that the sericin lithium salt at a metal (M=Na) substitution rate of 100% was used instead of the sericin as the binder in the manufacture of the negative electrode.

**Evaluation Example 1: Negative Electrode Evaluation**

Each of the negative electrodes of Examples 1-1 to 4-3 and Comparative Examples 1 and 2 were evaluated in the following method, and the results were shown in Table 1 below.

The tensile test method used a self-supporting dry film not attached on a substrate (copper foil). A specimen was prepared to have a size of a width of 25 mm and a length of 120 mm, wherein a device for making a dry film was driven in the length direction. In other words, the fiberized binder was elongated to measure the strength of the film. The manufactured specimen was vertically mounted on a tensile tester and pulled upward to measure the stress and the strain applied thereto.

A maximum tensile strength was expressed by measuring the yield strength at which the self-supporting film was broken. The maximum tensile strength was expressed as % based on 100% of the comparative example to determine an increased level from the comparative example. A maximum tensile strain was a strain at which the self-supporting film began to break. The maximum tensile strain may occur at the maximum tensile strength but occur before the maximum tensile strength, which were respectively measured.

The tensile tester used above was E3000 made by Instron, in which a 1 kN load cell was applied, and a tensile speed was set at 1 mm/min. In addition, in order to precisely check the tensile strain of the specimen, the surface of the specimen was checked In-situ.

Table 1:

|  | Binder | | Negative electrode characteristics | | | |
|---|---|---|---|---|---|---|
|  | Basic framework | M substitution rate | Thickness of negative electrode active material layer ($\mu$m) | Maximum tensile strength (MPa) | Maximum tensile strength (%) | Maximum Tensile strain (%) |
| Comparative Example 1 | Sericin | - | 83 | 0.88 | 100.0 | 8.73 |
| Example 1-1 | Li-Sericin | 50% | 82 | 0.962 | 109.3 | 9.00 |
| Example 1-2 | Li-Sericin | 75% | 83 | 0.951 | 108.1 | 8.99 |
| Example 1-3 | Li-Sericin | 100% | 84 | 0.948 | 107.7 | 8.95 |
| Example 2-1 | Na-Sericin | 50% | 83 | 0.932 | 105.9 | 8.98 |
| Example 2-2 | Na-Sericin | 75% | 83 | 0.928 | 105.5 | 8.86 |
| Example 2-3 | Na-Sericin | 100% | 85 | 0.929 | 105.6 | 8.80 |
| Comparative Example 2 | Serine | - | 83 | 0.889 | 100.0 | 8.40 |
| Example 3-1 | Li-Serine | 50% | 83 | 0.965 | 108.5 | 8.81 |
| Example 3-2 | Li-Serine | 70% | 84 | 0.958 | 107.8 | 8.86 |
| Example 3-3 | Li-Serine | 100% | 84 | 0.952 | 107.1 | 8.86 |
| Example 4-1 | Na-Serine | 50% | 83 | 0.954 | 107.3 | 8.87 |
| Example 4-2 | Na-Serine | 70% | 84 | 0.942 | 106.0 | 8.75 |
| Example 4-3 | Na-Serine | 100% | 85 | 0.935 | 105.2 | 8.73 |

**Evaluation Example 2: Evaluation of Rechargeable Lithium Battery Cell**

Each of the rechargeable lithium battery cells of Examples 1-1 to 4-3 and Comparative Examples 1 and 2 was evaluated in the following method, and the results are shown in Table 2 below.

Initial Efficiency (%) : After assembling the cells, the cells were stored at room temperature 25°C for 24 hours, and then charged and discharged at 0.2 C (Charge: CC/CV, 4.25 V 0.02 C Cut-off, Discharge: CC 2.8 V Cut-off) in a constant temperature chamber maintained at room temperature (25 °C) to calculate discharge capacity/charge capacity, which was obtained as initial efficiency.

Initial efficiency %: = (Initial charge capacity / Capacity after initial discharge) * 100. Equation 1:

(2) Discharge Capacity: After the formation, the cells were once more charged and discharged at 0.2 C under the same temperature condition, and discharge capacity at this time was expressed as standard discharge capacity, (Charge: CC/CV, 4.25 V 0.02C Cut-off, Discharge: CC 2.8 V Cut-off).

Cycle-life Characteristics: The rechargeable lithium battery cells, of which the formation and standard capacities were measured, were 250 cycles repeatedly charged at 0.5 C (CC/CV, 4.25 V, 0.05 C Cut-off) and discharged at 1.0 C (CC, 2.8V Cut-off) in the constant temperature chamber at the room temperature (25 °C) to evaluate a capacity retention rate. The capacity retention rate was expressed as a percentage of discharge capacity after the 250 cycles based on 100% of the discharge capacity at the 1st cycle according to Equation 2 below.

Capacity retention rate %: = (discharge capacity after 250th cycle / discharge capacity after 1st cycle) * 100. Equation 2:

In the above operations (1) to (3), the charge/discharge was performed by using a charger/discharger made by PNE.

Table 2:

| | Binder | | Rechargeable lithium battery cell characteristics | | |
|---|---|---|---|---|---|
| | Basic framework | M substitution rate | Discharge capacity (Ah) | Initial efficiency (%) | Cycle-life characteristics (@250cy, %) |
| Comparative Example 1 | Sericin | - | 2.45 | 86.5 | 76.60 |
| Example 1-1 | Li-Sericin | 50% | 2.50 | 87.8 | 81.51 |
| Example 1-2 | Li-Sericin | 75% | 2.50 | 87.9 | 82.52 |
| Example 1-3 | Li-Sericin | 100% | 2.51 | 88.0 | 81.47 |
| Example 2-1 | Na-Sericin | 50% | 2.49 | 87.1 | 81.90 |
| Example 2-2 | Na-Sericin | 75% | 2.49 | 87.1 | 82.04 |
| Example 2-3 | Na-Sericin | 100% | 2.49 | 87.3 | 82.80 |
| Comparative Example 2 | Serine | - | 2.45 | 86.8 | 76.62 |
| Example 3-1 | Li-Serine | 50% | 2.50 | 87.8 | 81.68 |
| Example 3-2 | Li-Serine | 70% | 2.51 | 87.9 | 82.05 |
| Example 3-3 | Li-Serine | 100% | 2.51 | 88.0 | 81.99 |
| Example 4-1 | Na-Serine | 50% | 2.48 | 87.1 | 81.52 |
| Example 4-2 | Na-Serine | 70% | 2.49 | 87.3 | 81.97 |
| Example 4-3 | Na-Serine | 100% | 2.48 | 87.1 | 82.00 |

Looking at Examples 1-1 to 4-3 and Comparative Examples 1 and 2, when a metal salt of hydrophilic amino acid (e.g., Li-Sericin, Na-Sericin, Li-Serine, Na-Serine, etc.) was used, compared with when hydrophilic amino acid (e.g., Sericin, Serine, etc.) was used, maximum tensile strength was not only increased, but also initial efficiency and cycle-life characteristics of the rechargeable lithium battery cells were improved at the same thickness level of the negative electrode active material layers.

Accordingly, it was confirmed that the electrode binder for a rechargeable lithium battery including a metal salt of a hydrophilic amino acid according to some example embodiments is suitably used in a dry process as well as free from the regulations on perfluorinated compounds.

Among the two types of hydrogenated nitrile butadiene rubber derivatives, the one having a relatively small weight average molecular weight was confirmed to constitute a dispersant for the conductive material, and the other having a relatively large weight average molecular weight was confirmed to constitute a binder and replace polyvinylidene fluoride.

Accordingly, a positive electrode slurry composition for a rechargeable lithium battery including the two types of hydrogenated nitrile butadiene rubber derivatives exhibited reduced or suppressed viscosity changes and, as a result, improved coating processability.

Therefore, a positive electrode, and a rechargeable lithium battery cell manufactured by using the positive electrode slurry composition for the rechargeable lithium battery according to some example embodiments exhibited desired or improved cycle-life characteristics

While this disclosure has been described in connection with what is presently considered to be practical example embodiments, it is to be understood that the disclosure is not limited to the example embodiments. On the contrary, the disclosure is intended to cover various modifications and equivalent arrangements included within the spirit and scope of the appended claims.

**Description of Symbols:**

| | | | |
|---|---|---|---|
| 100: | rechargeable lithium battery | 10: | positive electrode |
| 11: | positive electrode lead tab | 12: | positive electrode terminal |
| 20: | negative electrode | 21: | negative electrode lead tab |
| 22: | negative electrode terminal | 30: | separator |
| 40: | electrode assembly | 50: | case |
| 60: | sealing member | 70: | electrode tab |
| 71: | positive electrode tab | 72: | negative electrode tab |

**Claims**

1. An electrode binder for a rechargeable lithium battery (100), the electrode binder comprising:
   a metal salt of hydrophilic amino acid.

2. The electrode as claimed in claim 1, wherein the hydrophilic amino acid comprises at least one of sericin, serine, and a combination thereof.

3. The electrode as claimed in claim 1 or 2, wherein the metal salt comprises at least one of a lithium salt, a sodium salt, a potassium salt, and a combination thereof.

4. The electrode as claimed in any one of claims 1 to 3, wherein in the metal salt of hydrophilic amino acid:
   a *-C=O functional group of the hydrophilic amino acid is substituted with a *-C-O-M$^+$ functional group.

5. The electrode as claimed in claim 4, wherein in the metal salt of hydrophilic amino acid:
   among a total 100% of the *-C=O functional groups of the hydrophilic amino acid, a range of $\geq$ 10% to $\leq$ 100% are substituted with the *-C-O-M$^+$ functional group, wherein M comprises at least one of Li, Na, K, and a combination thereof.

6. An electrode for a rechargeable lithium battery (100), the electrode comprising:

   an electrode current collector; and
   an electrode active material layer on the electrode current collector,
   wherein the electrode active material layer comprises:

   an electrode binder comprising a metal salt of a hydrophilic amino acid; and
   an electrode active material.

7. The electrode as claimed in claim 6, wherein based on a total amount of 100 wt% of the electrode active material layer, the electrode binder is included in an amount in a range of $\geq$ 0.5 wt% to $\leq$ 5 wt%.

8. The electrode as claimed in claim 6 or 7, wherein the electrode active material layer is manufactured by a dry process that does not use a solvent.

9. A rechargeable lithium battery (100), comprising

a positive electrode (10);
a negative electrode (20);
a separator (30) between the positive electrode (10) and the negative electrode (20); and
an electrolyte solution,
wherein at least one of the positive electrode (10) and the negative electrode (20) comprises the electrode as claimed in any one of claims 6 to 8.

10. The rechargeable lithium battery (100) as claimed in claim 9, wherein the rechargeable lithium battery (100) comprises one of a lithium ion battery, a sodium ion battery, an all-solid-state battery, and a lithium-sulfur rechargeable battery.

【FIG. 1】

【FIG. 2】

【FIG. 3】

【FIG. 4】

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2018/226156 A1 (UNIV NANYANG TECH [SG]) 13 December 2018 (2018-12-13) * claims 1-33 * * paragraphs [0003], [0169], [0253], [0254], [0269] * | 1-10 | INV. H01M4/04 H01M4/13 H01M4/62 H01M10/0525 |
| Y | US 2020/136145 A1 (OHTA YUKI [JP] ET AL) 30 April 2020 (2020-04-30) * paragraphs [0011], [0012], [0020], [0026], [0039], [0114], [0157], [0221] * | 1-10 | |
| A | KANG JIEUN ET AL: "Customizing polymeric binders for advanced lithium batteries: Design principles and beyond", APPLIED PHYSICS REVIEWS AMERICAN INSTITUTE OF PHYSICS, 2 HUNTINGTON QUADRANGLE, MELVILLE, NY 11747, vol. 11, no. 1, 6 March 2024 (2024-03-06), XP012282923, DOI: 10.1063/5.0182553 [retrieved on 2024-03-06] * pages 19, 20, paragraph 2 * * page 27, paragraph C * * pages 28, 29, paragraph 2 * * table 3 * | 8 | |
| A | CN 118 956 338 A (UNIV GUANGDONG TECHNOLOGY) 15 November 2024 (2024-11-15) * paragraph [0018] * * claims 1-8 * | 1-10 | TECHNICAL FIELDS SEARCHED (IPC) H01M |
| A | CN 115 394 955 A (BEIJING SHENGNENG ENERGY TECH CO LTD) 25 November 2022 (2022-11-25) * claims 1-10 * | 1-10 | |

The present search report has been drawn up for all claims

| Place of search | Date of completion of the search | Examiner |
|---|---|---|
| The Hague | 30 March 2026 | Reich, Claus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 21 6512

This annex lists the patent family members relating to the patent documents cited in the above-mentioned European search report.
The members are as contained in the European Patent Office EDP file on
The European Patent Office is in no way liable for these particulars which are merely given for the purpose of information.

30-03-2026

| Patent document cited in search report | Publication date | Patent family member(s) | | Publication date |
|---|---|---|---|---|
| WO 2018226156 A1 | 13-12-2018 | NONE | | |
| US 2020136145 A1 | 30-04-2020 | CN | 110785879 A | 11-02-2020 |
| | | KR | 20200014888 A | 11-02-2020 |
| | | TW | 201904120 A | 16-01-2019 |
| | | US | 2020136145 A1 | 30-04-2020 |
| | | WO | 2018225539 A1 | 13-12-2018 |
| CN 118956338 A | 15-11-2024 | NONE | | |
| CN 115394955 A | 25-11-2022 | NONE | | |

EPO FORM P0459

For more details about this annex : see Official Journal of the European Patent Office, No. 12/82